# EUROPEAN PATENT SPECIFICATION

(11) **EP 3 093 186 B1**
(45) Date of publication and mention of the grant of the patent: **30.12.2020**
(21) Application number: 16169628.1
(22) Date of filing: 13.05.2016
(51) Int. Cl.: A61H 9/00, B60N 2/90

(54) **VARYING TUBE SIZE OF SEAT TO PROLONG COMFORT IN AEROSPACE VEHICLE**
VARIIERENDE ROHRGRÖSSE EINES SITZES ZUR VERBESSERUNG DES KOMFORTS IN EINEM LUFTFAHRZEUG
TAILLE DE TUBE VARIABLE DE SIÈGE POUR PROLONGER LE CONFORT DANS UN VÉHICULE AÉROSPATIAL

(30) Priority: 13.05.2015 US 201514711599
(43) Date of publication of application: 16.11.2016
(73) Proprietor: AMI Industries, Inc., Colorado Springs, CO 80916 (US)
(72) Inventor: MARAPPAN, Bharath, 560037 Karnataka (IN); HOSMANI, Mahesh Virupaxi, 560102 Karnataka (IN); KOZHUPURAM, Akhil Rajagopal, 560008 Karnataka (IN); KUPPAN, Skandan Berikai, 560050 Karnataka (IN)
(74) Representative: Dehns

(56) References cited:
- EP-A1- 0 489 310
- WO-A1-01/17402
- WO-A1-2007/020219
- WO-A1-2015/039701
- WO-A2-00/03628
- WO-A2-03/013907
- DE-A1- 3 804 848
- DE-A1- 3 804 961
- GB-A- 2 406 507
- GB-A- 2 419 286
- US-A- 5 010 608
- US-A- 5 701 622
- US-A- 6 088 643
- US-A1- 2002 108 180
- US-B1- 6 682 059

## Description

### BACKGROUND

In general, prolonged period of seating causes poor blood circulation and compression of body tissues resulting in discomfort, numbness, and/or soreness to the occupant. For example, fighter flights may require a pilot to be seated for many hours in a cramped cockpit that allows little movement, causes discomfort, numbness, and/or soreness, and effects performance capabilities of the pilot. To avoid discomfort, numbness, and/or soreness, the occupant generally resorts to fidgeting.

GB 2419286 A discloses a prior art repositioning system as set forth in the preamble of claim 1.

US 5010608 A discloses another prior art system.

### BRIEF DESCRIPTION

According to the invention there is provided a repositioning system as set forth in claim 1 and a repositioning method according to claim 5.

According to an embodiment of the repositioning system embodiment above, the seat structure is configured to support the plurality of inflatable tubes.

According to another embodiment of any of the repositioning system embodiments above, the repositioning system can comprise a compressor configured to provide air to the plurality of inflatable tubes in accordance with the predetermined time interval.

According to another embodiment of any of the repositioning system embodiments above, the repositioning system can be in a seat of an aircraft.

There is further provided a repositioning method as set forth in claim 5.

According to an embodiment or the repositioning method embodiment above, the repositioning method can support the plurality of inflatable tubes by the seat structure.

According to another embodiment or any of the repositioning method embodiments above, the repositioning method can provide air to the plurality of inflatable tubes in accordance with the predetermined time interval by a compressor.

According to another embodiment or any of the repositioning method embodiments above, a seat of an aircraft can comprise the plurality of inflatable tubes.

Additional features and advantages are realized through the techniques of embodiments herein. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates the plurality of inflatable tubes of the repositioning system without the soft foam cushion;
FIG. 2 illustrates operational examples of a tube subsystem of a repositioning system according to prior art;
FIG. 3 illustrates another operational example of a tube subsystem of a repositioning system in accordance with the present invention;
FIG. 4 illustrates another operational example of a tube subsystem of a repositioning stem according to the state of the art; and
FIG. 5 illustrates a processing system configured to control an operation of a tube subsystem of a repositioning system in accordance with an embodiment.

### DETAILED DESCRIPTION

A detailed description of one or more embodiments of the disclosed apparatus and method are presented herein by way of exemplification and not limitation with reference to the Figures.

As indicated above, occupants seated for prolonged periods generally resort to fidgeting to avoid discomfort, numbness, and/or soreness. Thus, what is needed is a mechanism that prevents pressure related discomfort in lieu of fidgeting.

In general, embodiments disclosed herein may include a system, method, and/or computer program product (herein repositioning system) for preventing pressure related discomfort by varying an amount of pressure exerted on a unit area of a posterior of an occupant with respect to a time. The amount of pressure exerted can be determined by a seating posture, a weight (load) applied through that unit area of contact between a body of the occupant and a contacting surface, and properties of the contact surface. The repositioning system reduces pressure duration applied to a surface by moving (e.g., repositioning) peak pressure points regularly (e.g., periodically), thereby altering constantly or at predetermined intervals a pressure distribution of the amount of pressure exerted on the unit area. The repositioning system may be employed in any apparatus for supporting an occupant, examples of which include aircraft seats, medical seats, wheel chairs, hospital beds, automobile seats, high comfort seat, massaging seat etc.

In one embodiment, the repositioning system may be implemented in an aircraft. The flight seat further includes the repositioning system housed within a seated portion of the flight seat. The repositioning system comprises a soft foam cushion supported by a seat structure and tubes.

The soft foam cushion provides a continuous surface for direct contact with the posterior of the occupant and can provide comfort in case of failure of the tubes. The seat structure is a hard surface on which the tubes rest and expand. The tubes can be air-inflated hoses of varying diameters. Example diameters of each tubes of the first set of tubes include .25", .5", .75", 1.0", 1.25", 1.5", 1.75", 2.0", 2.25" (6.4mm, 12.7mm, 19.1mm, 25.4mm, 31.8mm, 38.1mm, 44.5mm, 50.8mm, 57.2m), etc. The tubes may be inflated to and from any pressure sufficient for supporting varying pressure points. Examples of an air pressure range include 0 to 4 pounds per square inch (0 to 27.58 kPa), 1 to 4.5 pounds per square inch (6.89 to 31.03 kPa), .5 to 2.1 pounds per square inch (3.45 to 14.48 kPa), and the like.

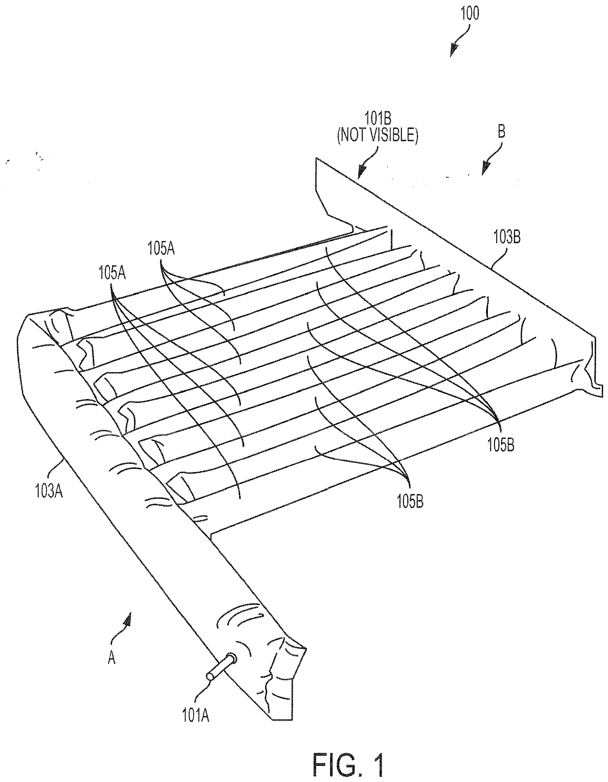

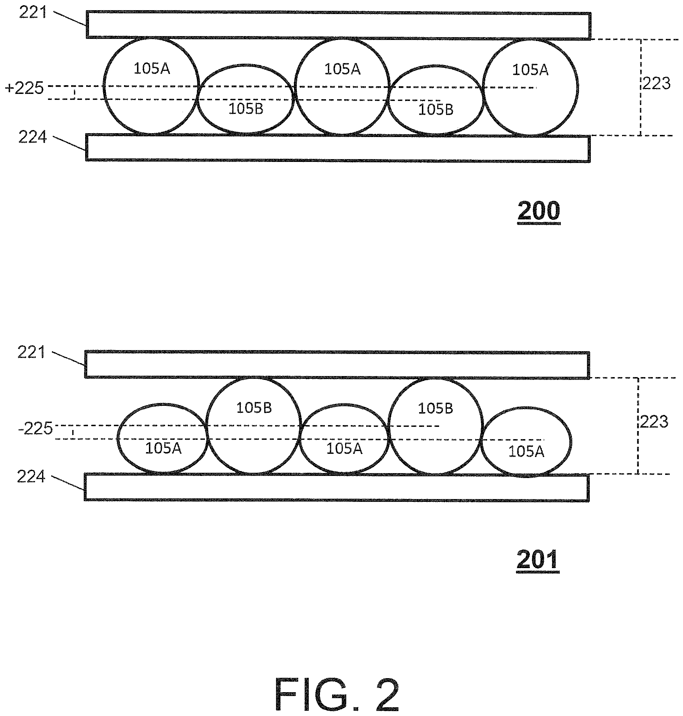

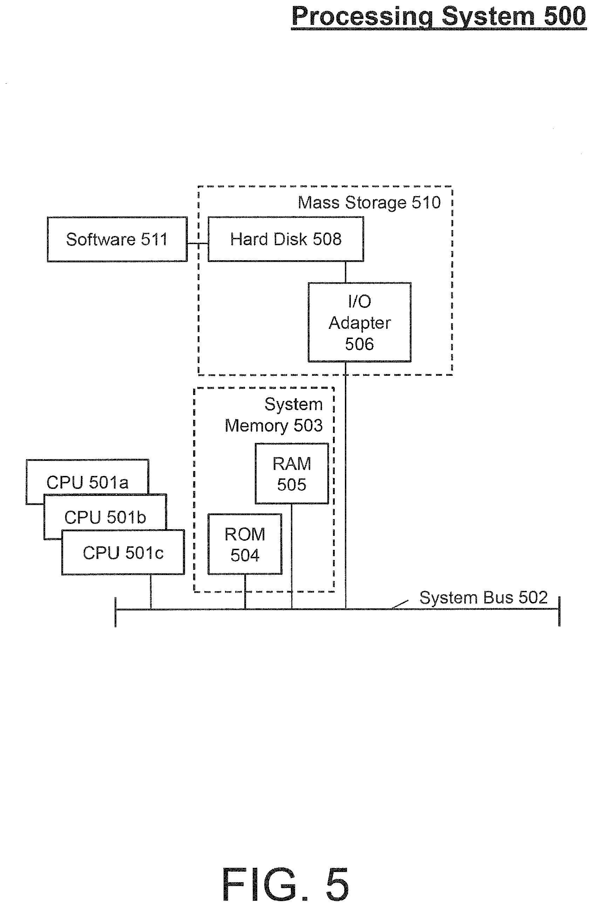

Turning now to FIG. 1, the plurality of inflatable tubes of the repositioning system described above is depicted as a tube sub-system 100. The tube subsystem 100 includes a first tube section A and a second tube section B. The tube sections A, B include valves 101A, 101B, feeder tubes 103A, 103B, and support tubes 105A, 105B. In general, air can be fed through each valve 101A, 101B to the feeders tubes 103A, 103B and the support tubes 105A, 105B at varying pressure rates and intervals such that each tube section A and B is independently inflated and deflated in accordance with a desired pressure distribution by a compressor and/or regulator (e.g., controlled by a processing system 500 as described below with respect to FIG. 5). Embodiments of example operations of the repositioning system will now be described with respect to FIGS. 2-4.

Turning now to FIG. 2, which falls outside the scope of the claims and representing the state of the art, transition by the repositioning system between a first arrangement 200 and a second arrangement 201 is depicted. Each arrangement 200, 201 illustrates a soft foam cushion 221 separated by a plurality of alternating tubes (e.g., a first set of tubes 105A and a second set of tubes 105B) at a first distance 223 from a seat structure 224. The diameter of each tube of both tube sets is equivalent when all tubes are fully inflated.

In the first arrangement 200, the first set of tubes 105A is fully inflated to maintain the first distance 223. Further, a straight line denoting geometric centers of each of the first set of tubes 105A is at a second distance 225 from a straight line denoting geometric centers of each of the second set of tubes 105B.

In the second arrangement 201, the second set of tubes 105B is fully inflated to also maintain the first distance 223. Further, a straight line denoting geometric centers of each of the second set of tubes 105B is at the second distance 225 from a straight line denoting geometric centers of each of the first set of tubes 105A. Note that the polarity of the second distance 225 changes in accordance with which tube set is inflated.

In operation, the repositioning system changes the pressure in each tube set in a sequential manner to maintain the first distance 223, which switches pressure points between positions on the soft foam cushion 221 relative to the geometric centers of each inflated set of tubes (e.g., the pressure points are in-line with where each inflated tube contacts the soft foam cushion 221). Each set of tubes in the repositioning system may change the pressure with respect to $P = P 0 + T ∗ \frac{dP}{dT} ,$ where P is the current pressure in a particular set of tubes, P0 is the initial pressure of that set of tubes such as zero, T is a predetermined time interval, such as 5 minutes, 10 minutes, 15 minutes, etc., and $\frac{dP}{dT}$ is a predetermined rate of change of pressure (which could be negative or positive). Note that the above pressure change equation may be applied independently to each tube set of the repositioning system.

For example, at a time T = 0, the repositioning system maintains the sets of tubes at their initial pressures, which can be denoted by P0_{A} and P0_{B}, where P0_{A} is the initial pressure of first set of tubes 105A and P0_{B} is the initial pressure of the second set of tubes 105B. Then, at T = 1 (i.e., the next interval), the repositioning system increases the pressure of the first set of tubes 105A (inflate) by a value of 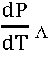 while decreasing the pressure of the second set of tubes 105B (deflate) by a value of 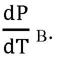 In this way, at each odd interval value of time, the repositioning system inflates the first set of tubes 105A and deflates the second set of tubes 105B. Further, at each even interval value of time, the repositioning system inflates the second set of tubes 105B and deflates the first set of tubes 105A. Thus, the first set of tubes 105B provides a set of pressure points to the soft foam cushion 221 at each odd interval value, and the second set of tubes 105A provides a set of pressure points to the soft foam cushion 221 at time each even interval value.

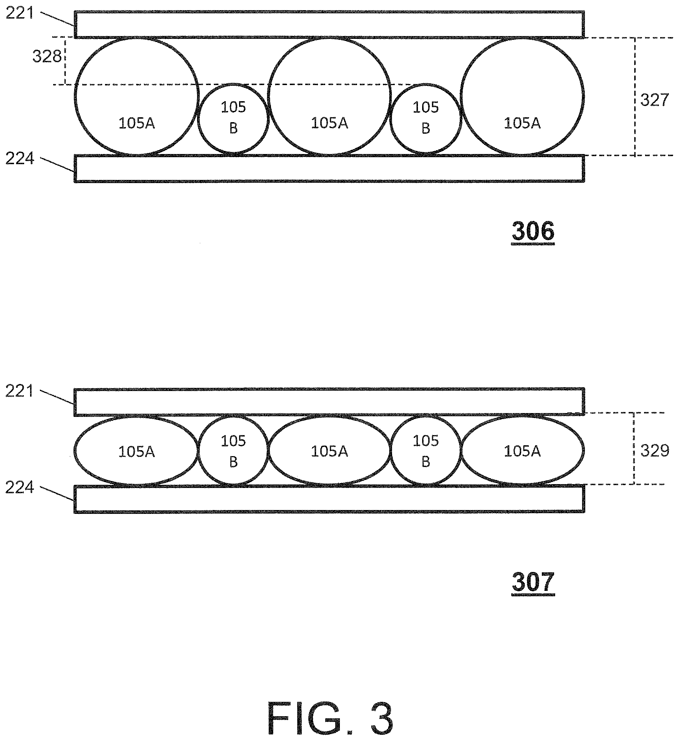

Turning now to FIG. 3, according to the present invention, a transition by the repositioning system between a first arrangement 306 and a second arrangement 307 is depicted. Each arrangement 306, 607 illustrates a soft foam cushion 221 separated by a plurality of alternating tubes (e.g., a first set of tubes 105A and a second set of tubes 105B) from a seat structure 224. The diameter of each tube of the first set of tubes 105A is larger than the diameter of each tube of the second set of tubes 105B, when all tubes are fully inflated.

In the first arrangement 306, the first set of tubes 105A is fully inflated to maintain a first distance 327. Further, a straight line tangential to the top surface of the first set of tubes 105A is at a second distance 328 from a straight line tangential to the top surface of the second set of tubes 105B. Note that the second set of tubes 105B is also fully inflated.

In the second arrangement 307, the first set of tubes 105A is deflated to enable the second set of tubes 105B to contact the soft foam cushion 221. In this way, a third distance 329 is established between the soft foam cushion 221 and the seat structure 224. The third distance 329 is the difference between the first distance 327 and the second distance 328.

Thus, in operation, the repositioning system varies the pressure in each tube of the first set of tubes 105A to switch the pressure points between positions on the soft foam cushion 221 relative to the geometric centers of each inflated set of tubes. The repositioning system may also change the pressure with respect to $P = P 0 + T ∗ \frac{dP}{dT} .$

For example, at a time T = 0, the repositioning system maintains both the sets of tubes 105A, 105B at their initial pressures, which can be denoted by P0_{A} and P0_{B}, where P0_{A} is the initial pressure of first set of tubes 105A and P0_{B} is the initial pressure of the second set of tubes 105B. Then, at T = 1 (i.e., the next interval), the repositioning system deflates the first set of tubes 105A, while leaving the second set of tubes 105B inflated. In this way, at each odd interval value of time, the second set of tubes 105B provides a set of pressure points to the soft foam cushion 221. Further, the first set of tubes 105A provides a different set of pressure points to the soft foam cushion 221 at each even interval value of time.

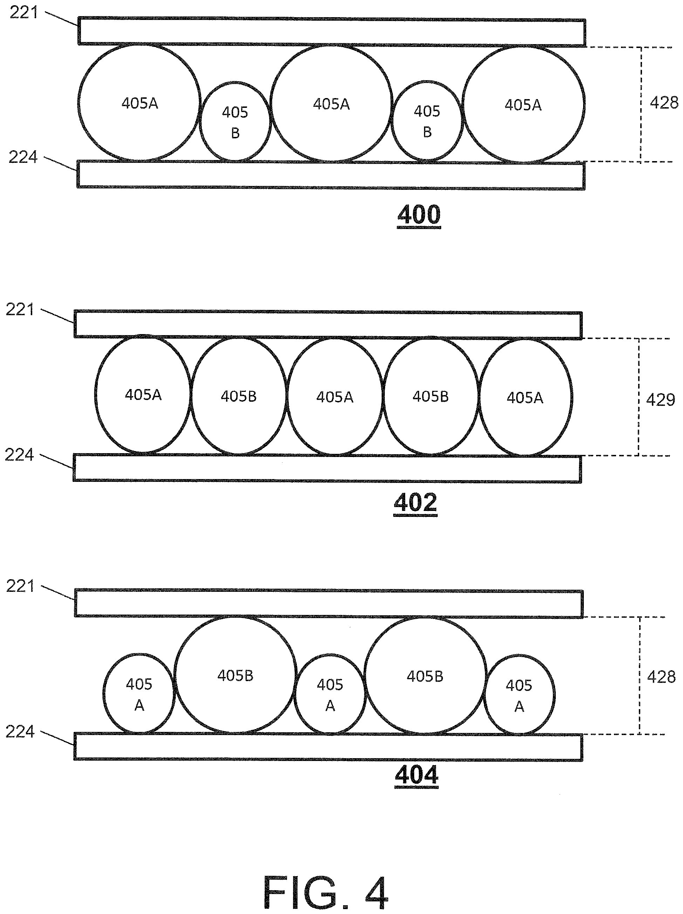

Turning now to FIG. 4, which falls outside the scope of the claims, a transition by the repositioning system between a first arrangement 400, a second arrangement 402, and a third arrangement 404 is depicted. Each arrangement 400, 402, 404 illustrates a soft foam cushion 221 separated by a plurality of alternating tubes (e.g., a first set of tubes 405A and a second set of tubes 405B) at a distance 428 or 429 from the seat structure 224. The diameters of each tube of both sets of tubes are equivalent when all tubes are fully inflated.

In the first arrangement 400, the first set of tubes 405A is fully inflated to maintain the distance 428. In the second arrangement 402, all of the tubes 405A, 405B are partially inflated to maintain the distance 429. Note that in the second arrangement, the partially inflated tubes support one another laterally. In the third arrangement 404, the second set of tubes 405B is fully inflated to maintain the distance 428. As shown in FIG. 4, each tube remains in contact with seat structure 224.

In operation, the repositioning system changes the pressure in each tube set in a sequential manner to maintain the distance 49, while at least any one set of tubes 405A or 405B are in their fully inflated condition, or to maintain the distance 429, while both tubes are in their partially inflated condition, which switches pressure points between positions on the soft foam cushion 221 relative to the geometric centers of each inflated set of tubes (e.g., the pressure points are in-line with where each inflated tube contacts the soft foam cushion 221). Each set of tubes in the repositioning system may also change the pressure with respect to $P = P 0 + T ∗ \frac{dP}{dT}$ where P is the current pressure in a particular set of tubes, P0 is the initial pressure of that set of tubes such as zero, T is a predetermined time interval, such as 5 minutes, 10 minutes, 15 minutes, etc., and $\frac{dP}{dT}$ is a predetermined rate of change of pressure (which could be negative or positive).

For example, at a time T = 0, the repositioning system maintains both the sets of tubes 405A and 405B at their initial pressures, which can be denoted by P0_{A} and P0_{B}, where P0_{A} is the initial pressure of the first set of tubes 405A and P0_{B} is the initial pressure of the second set of tubes 405B. Then, at T = 1 (i.e., the next interval), the repositioning system partially deflates the first set of tubes 405A and partially inflates the second set of tubes 405B. Then, at T = 2 (i.e., the next interval), the repositioning system partially deflates the first set of tubes 45A and partially deflates the second set of tubes 405B. In this way, for every interval of time, the repositioning system changes a set of pressure points to the soft foam cushion 221.

Referring now to FIG. 5, there is shown an embodiment of a processing system 500 for controlling an operation of the repositioning system. In this embodiment, the processing system 500 has one or more central processing units (processors) 501a, 501b, 501c, etc. (collectively or generically referred to as processor(s) 501). The processors 501, also referred to as processing circuits, are coupled via a system bus 502 to system memory 503 and various other components. The system memory 503 can include read only memory (ROM) 504 and random access memory (RAM) 505. The ROM 504 is coupled to system bus 502 and may include a basic input/output system (BIOS), which controls certain basic functions of the processing system 500. RAM is read-write memory coupled to system bus 502 for use by processors 501.

In addition to the above, the processing system 500 may include an input/output (I/O) adapter 506 and a network adapter 507 coupled to the system bus 502. I/O adapter 506 may be a small computer system interface (SCSI) adapter that communicates with a hard disk 508 or any other similar component. I/O adapter 506 and hard disk 508 may be collectively referred to herein as mass storage 510. Software 511 for execution on processing system 500 may be stored in mass storage 510. The mass storage 510 is an example of a tangible storage medium readable by the processors 501, where the software 511 is stored as instructions for execution by the processors 501 to control the operation of the repositioning system (e.g., controlling the operation of a compressor that inflates and deflates the tube subsystem 100).

In one embodiment, the I/O adapter 506 may be connected to one or more I/O buses that are connected to system bus 502 via an intermediate bus bridge (not shown). Suitable I/O buses for connecting peripheral devices such as hard disk controllers, network adapters, and graphics adapters typically include common protocols, such as the Peripheral Component Interconnect (PCI).

Thus, as configured in FIG. 5, the processing system 500 includes processing capability in the form of processors 501 and storage capability in the form of at least the system memory 503. In one embodiment, a portion of system memory 503 and mass storage 510 collectively store an operating system to coordinate the functions of the various components shown in FIG. 5. Note that in an embodiment, the processing system 500 may be implemented as part of air management system 100, whether local to a testing environment or onboard an aircraft, in communication with the air management system 100.

In view of the above, the technical effects and benefits of embodiments herein include improving comfort of an occupant as pressure points are moved with respect to time, so as to reduce or eliminate tissue compression of the occupant for prolonged period. Further, the technical effects and benefits of embodiments herein include providing the occupant a good massaging effort, which prevents edema formation and blood coagulation. In addition, the technical effects and benefits further include the ability to maintain existing levels of comfort even in case of failure of the repositioning system.

A computer program product may include a computer readable storage medium (or media) having computer readable program instructions thereon for causing a processor to carry out aspects of embodiments herein. The computer readable storage medium can be a tangible device that can retain and store instructions for use by an instruction execution device.

The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of embodiments herein has been presented for purposes of illustration and description, but is not intended to be exhaustive or limited to the invention in the form disclosed. Many modifications and variations will be apparent to those of ordinary skill in the art without departing from the scope of the invention according to the attached claims. The embodiment was chosen and described in order to best explain the principles of the invention and the practical application, and to enable others of ordinary skill in the art to understand the invention for various embodiments with various modifications as are suited to the particular use contemplated.

## Claims

1. A repositioning system (100), comprising:
a plurality of inflatable tubes (105A, 105B), wherein the plurality of inflatable tubes (105A, 105B) comprises a first tube set (105A) and a second tube set (105B), the plurality of inflatable tubes (105A, 105B) is configured to provide a pressure distribution to an object (221) supported by the plurality of inflatable tubes (105A, 105B), and the first tube set (105A) is configured to be inflated and deflated at a predetermined time interval to shift the pressure distribution;
**characterised in that**:
the repositioning system (100) further comprises a soft foam cushion (221) supported by the plurality of inflatable tubes (105A, 105B);
the soft foam cushion (221) provides a continuous plane that supports an occupant as the first tube set (105A) is inflated;
the first tube set (105A), when fully inflated, maintains a first distance (327) between the soft foam cushion (221) and a seat structure (224);
the second tube set (105B) maintains a second distance (329) between the soft foam cushion (221) and the seat structure (224) when the first tube set (105A) is deflated; and
a diameter of each tube of the first tube set (105A) is larger than a diameter of each tube of the second tube set (105B) when all the tubes are fully inflated.

2. The repositioning system (100) of claim 1, wherein the seat structure (224) is configured to support the plurality of inflatable tubes (105A, 105B).

3. The repositioning system (100) of claim 1 or 2, further comprising:
a compressor configured to provide air to the plurality of inflatable tubes (105A, 105B) in accordance with the predetermined time interval.

4. The repositioning system (100) of any preceding claim, wherein the repositioning system (100) is in a seat of an aircraft.

5. A repositioning method, comprising:
providing a pressure distribution to an object (221) supported by a plurality of inflatable tubes (105A, 105B), the plurality of inflatable tubes (105A, 105B) comprising a first tube set (105A) and a second tube set (105B); and
shifting the pressure distribution by inflating and deflating the first tube set (105A) at a predetermined time interval;
**characterised in that**:
the repositioning method further comprises supporting a soft form cushion (221) by the plurality of inflatable tubes (105A, 105B) and providing a continuous plane that supports an occupant as the first tube set (105A) is inflated by the soft foam cushion (221);
the first tube set (105A), when fully inflated, maintains a first distance (327) between the soft foam cushion (221) and a seat structure (224);
the second tube set (105B) maintains a second distance (329) between the soft foam cushion (221) and the seat structure (224) when the first tube set (105A) is deflated; and
a diameter of each tube of the first tube set (105A) is larger than a diameter of each tube of the second tube set (105B) when all the tubes are fully inflated.

6. The repositioning method of claim 5, further comprising:
supporting the plurality of inflatable tubes (105A, 105B) by the seat structure (224).

7. The repositioning method of claim 5 or 6, further comprising:
providing air to the plurality of inflatable tubes (105A, 105B) in accordance with the predetermined time interval by a compressor.

8. The repositioning method of claim 5, 6 or 7, wherein a seat of an aircraft comprises the plurality of inflatable tubes (105A, 105B).

## Patentansprüche

1. Repositionierungssystem (100), umfassend:
eine Vielzahl von aufblasbaren Rohren (105A, 105B), wobei die Vielzahl von aufblasbaren Rohren (105A, 105B) einen ersten Rohrsatz (105A) und einen zweiten Rohrsatz (105B) umfasst, wobei die Vielzahl von aufblasbaren Rohren (105A, 105B) dazu konfiguriert ist, eine Druckverteilung auf ein Objekt (221), das durch die Vielzahl von aufblasbaren Rohren (105A, 105B) getragen wird, bereitzustellen, und wobei der erste Rohrsatz (105A) dazu konfiguriert ist, in einem vorbestimmten Zeitintervall aufgeblasen und entleert zu werden, um die Druckverteilung zu verlagern;
**dadurch gekennzeichnet, dass**:
das Repositionierungssystem (100) ferner ein weiches Schaumstoffkissen (221) umfasst, das durch die Vielzahl von aufblasbaren Rohren (105A, 105B) getragen wird;
das weiche Schaumstoffkissen (221) eine durchgehende Ebene bereitstellt, die einen Insassen trägt, während der erste Rohrsatz (105A) aufgeblasen wird;
der erste Rohrsatz (105A) einen ersten Abstand (327) zwischen dem weichen Schaumstoffkissen (221) und einer Sitzstruktur (224) aufrechterhält, wenn er vollständig aufgeblasen ist;
der zweite Rohrsatz (105B) einen zweiten Abstand (329) zwischen dem weichen Schaumstoffkissen (221) und der Sitzstruktur (224) aufrechterhält, wenn der erste Rohrsatz (105A) entleert ist; und
ein Durchmesser jedes Rohres des ersten Rohrsatzes (105A) größer als ein Durchmesser jedes Rohres des zweiten Rohrsatzes (105B) ist, wenn alle Rohre vollständig aufgeblasen sind.

2. Repositionierungssystem (100) nach Anspruch 1, wobei die Sitzstruktur (224) dazu konfiguriert ist, die Vielzahl von aufblasbaren Rohren (105A, 105B) zu tragen.

3. Repositionierungssystem (100) nach Anspruch 1 oder 2, ferner umfassend:
einen Verdichter, der dazu konfiguriert ist, der Vielzahl von aufblasbaren Rohren (105A, 105B) Luft gemäß dem vorbestimmten Zeitintervall bereitzustellen.

4. Repositionierungssystem (100) nach einem der vorhergehenden Ansprüche, wobei sich das Repositionierungssystem (100) in einem Sitz eines Luftfahrzeugs befindet.

5. Repositionierungsverfahren, umfassend:
Bereitstellen einer Druckverteilung auf ein Objekt (221), das durch die Vielzahl von aufblasbaren Rohren (105A, 105B) getragen wird, wobei die Vielzahl von aufblasbaren Rohren (105A, 105B) einen ersten Rohrsatz (105A) und einen zweiten Rohrsatz (105B) umfasst; und
Verlagern der Druckverteilung durch Aufblasen und Entleeren des ersten Rohrsatzes (105A) in einem vorbestimmten Zeitintervall;
**dadurch gekennzeichnet, dass**:
das Repositionierungsverfahren ferner das Tragen eines weichen Schaumstoffkissens (221) durch die Vielzahl von aufblasbaren Rohren (105A, 105B) und das Bereitstellen einer durchgehenden Ebene umfasst, die einen Insassen trägt, während der erste Rohrsatz (105A) durch das weiche Schaumstoffkissen (221) aufgeblasen wird;
der erste Rohrsatz (105A) einen ersten Abstand (327) zwischen dem weichen Schaumstoffkissen (221) und einer Sitzstruktur (224) aufrechterhält, wenn er vollständig aufgeblasen ist;
der zweite Rohrsatz (105B) einen zweiten Abstand (329) zwischen dem weichen Schaumstoffkissen (221) und der Sitzstruktur (224) aufrechterhält, wenn der erste Rohrsatz (105A) entleert ist; und ein Durchmesser jedes Rohres des ersten Rohrsatzes (105A) größer als ein Durchmesser jedes Rohres des zweiten Rohrsatzes (105B) ist, wenn alle Rohre vollständig aufgeblasen sind.

6. Repositionierungsverfahren nach Anspruch 5, ferner umfassend:
Tragen der Vielzahl von aufblasbaren Rohren (105A, 105B) durch die Sitzstruktur (224).

7. Repositionierungsverfahren nach Anspruch 5 oder 6, ferner umfassend:
Bereitstellen von Luft bei der Vielzahl von aufblasbaren Rohren (105A, 105B) gemäß den vorbestimmten Zeitintervallen durch einen Verdichter.

8. Repositionierungsverfahren nach Anspruch 5, 6 oder 7, wobei ein Sitz eines Luftfahrzeugs die Vielzahl von aufblasbaren Rohren (105A, 105B) umfasst.

## Revendications

1. Système de repositionnement (100), comprenant :
une pluralité de tubes gonflables (105A, 105B), dans lequel la pluralité de tubes gonflables (105A, 105B) comprend un premier ensemble de tubes (105A) et un second ensemble de tubes (105B), la pluralité de tubes gonflables (105A, 105B) est configurée pour fournir une répartition de pression à un objet (221) supporté par la pluralité de tubes gonflables (105A, 105B), et le premier ensemble de tubes (105A) est configuré pour être gonflé et dégonflé à un intervalle de temps prédéterminé pour décaler la répartition de pression ;
**caractérisé en ce que** :
le système de repositionnement (100) comprend en outre un coussin en mousse souple (221) supporté par la pluralité de tubes gonflables (105A, 105B) ;
le coussin en mousse souple (221) fournit un plan continu qui supporte un occupant lorsque le premier ensemble de tubes (105A) est gonflé ;
le premier ensemble de tubes (105A), lorsqu'il est entièrement gonflé, maintient une première distance (327) entre le coussin en mousse souple (221) et une structure de siège (224) ;
le second ensemble de tubes (105B) maintient une seconde distance (329) entre le coussin en mousse souple (221) et la structure de siège (224) lorsque le premier ensemble de tubes (105A) est dégonflé ; et
un diamètre de chaque tube du premier ensemble de tubes (105A) est plus grand qu'un diamètre de chaque tube du second ensemble de tubes (105B) lorsque tous les tubes sont entièrement gonflés.

2. Système de repositionnement (100) selon la revendication 1, dans lequel la structure de siège (224) est configurée pour supporter la pluralité de tubes gonflables (105A, 105B).

3. Système de repositionnement (100) selon la revendication 1 ou 2, comprenant en outre :
un compresseur conçu pour fournir de l'air à la pluralité de tubes gonflables (105A, 105B) conformément à l'intervalle de temps prédéterminé.

4. Système de repositionnement (100) selon une quelconque revendication précédente, dans lequel le système de repositionnement (100) est dans un siège d'un aéronef.

5. Procédé de repositionnement, comprenant :
la fourniture d'une répartition de pression à un objet (221) supporté par une pluralité de tubes gonflables (105A, 105B), la pluralité de tubes gonflables (105A, 105B) comprenant un premier ensemble de tubes (105A) et un second ensemble de tubes (105B) ; et
le décalage de la répartition de pression en gonflant et en dégonflant le premier ensemble de tubes (105A) à un intervalle de temps prédéterminé ;
**caractérisé en ce que** :
le procédé de repositionnement comprend en outre le support d'un coussin de forme souple (221) par la pluralité de tubes gonflables (105A, 105B) et la fourniture d'un plan continu qui supporte un occupant lorsque le premier ensemble de tubes (105A) est gonflé par le coussin en mousse souple (221) ;
le premier ensemble de tubes (105A), lorsqu'il est entièrement gonflé, maintient une première distance (327) entre le coussin en mousse souple (221) et une structure de siège (224) ;
le second ensemble de tubes (105B) maintient une seconde distance (329) entre le coussin en mousse souple (221) et la structure de siège (224) lorsque le premier ensemble de tubes (105A) est dégonflé ; et
un diamètre de chaque tube du premier ensemble de tubes (105A) est plus grand qu'un diamètre de chaque tube du second ensemble de tubes (105B) lorsque tous les tubes sont entièrement gonflés.

6. Procédé de repositionnement selon la revendication 5, comprenant en outre :
le support de la pluralité de tubes gonflables (105A, 105B) par la structure de siège (224).

7. Procédé de repositionnement selon la revendication 5 ou 6, comprenant en outre :
la fourniture de l'air à la pluralité de tubes gonflables (105A, 105B) conformément à l'intervalle de temps prédéterminé par un compresseur.

8. Procédé de repositionnement selon la revendication 5, 6 ou 7, dans lequel un siège d'un aéronef comprend la pluralité de tubes gonflables (105A, 105B).
